# EUROPÄISCHE PATENTSCHRIFT

(11) **EP 3 377 815 B1**
(45) Veröffentlichungstag und Bekanntmachung des Hinweises auf die Patenterteilung: **16.03.2022**
(21) Anmeldenummer: 16798488.9
(22) Anmeldetag: 19.11.2016
(51) Int. Cl.: F23C 13/00, F23K 5/22, F23D 3/40, F02M 27/02

(54) **VERFAHREN UND VORRICHTUNG ZUR EINSTELLUNG DER ZÜNDEIGENSCHAFT EINES BRENNSTOFFS, INSBESONDERE ZUR SENKUNG DES SCHADSTOFFAUSSTOSSES VON VERBRENNUNGSEINRICHTUNGEN**
METHOD AND APPARATUS FOR ADJUSTING THE IGNITION CHARACTERISTIC OF A FUEL, IN PARTICULAR IN ORDER TO LOWER EXHAUST EMISSIONS OF COMBUSTION DEVICES
PROCÉDÉ ET DISPOSITIF DE RÉGLAGE DE LA CARACTÉRISTIQUE D'ALLUMAGE D'UN COMBUSTIBLE, EN PARTICULIER POUR DIMINUER LES ÉMISSIONS D'ÉCHAPPEMENT DE DISPOSITIFS DE COMBUSTION

(30) Priorität: 19.11.2015 DE 102015120106
(43) Veröffentlichungstag der Anmeldung: 26.09.2018
(73) Patentinhaber: Fraunhofer-Gesellschaft zur Förderung der angewandten Forschung e.V., 80686 München (DE)
(72) Erfinder: AICHER, Thomas, 79102 Freiburg (DE); SZOLAK, Robert, 79111 Freiburg (DE); SUSDORF, Alexander, 79206 Breisach (DE)
(86) Internationale Anmeldenummer: PCT/EP2016/078213
(87) Internationale Veröffentlichungsnummer: WO 2017/085301

(56) Entgegenhaltungen:
- DE-A1-102006 060 669
- DE-A1-102010 012 945
- US-A- 3 828 736
- US-A- 4 112 876
- US-A1- 2005 011 486
- US-A1- 2007 180 819

## Beschreibung

Die vorliegende Erfindung betrifft ein Verfahren und eine Vorrichtung zur Einstellung der Zündeigenschaft eines flüssigen oder gasförmigen Brennstoffs durch thermische, katalytische und Oxidationsreaktionen. Nach dem Start ist keine externe Energiezufuhr von außen erforderlich. Die Wärme für die thermischen und/oder katalytischen Reaktionen wird durch eine Oxidation eines zugeführten Oxidationsmittels mit einem Teil des zugeführten Brennstoffs auf einem Katalysator bereitgestellt. Das Verfahren und die Vorrichtung beinhalten eine Verteilungszone, die eine Verteilungsstruktur enthält, auf der flüssige Brennstoffe verdampft werden können. Die Oxidationsreaktionen stellen ebenso die Wärme für eine Verdampfung flüssiger Brennstoffe bereit. Ferner wird die Wärme dazu genutzt, den Brennstoff katalytisch und/oder thermisch umzuwandeln. Dadurch kann die Brennstoffeigenschaft gezielt an verschiedene Anwendungen angepasst werden. Das hier beschriebene Verfahren und die beschriebene Vorrichtung kann aus einem Brennstoff mit einer hohen Cetanzahl, entsprechend ergeben sich kurze Zündverzugszeiten und niedrige Zündtemperaturen, einen Brennstoff mit einer hohen Oktanzahl, entsprechend ergeben sich längere Zündverzugszeiten und höhere Zündtemperaturen, erzeugen. Der Brennstoff kann so eingestellt werden, dass Schadstoffe wie Ruß und Stickoxide in einer Verbrennungseinheit, beispielsweise einem Verbrennungsmotor, einer Gasturbine oder einem Gasbrenner gesenkt werden können. Zudem kann der Wirkungsgrad erhöht werden. Es können erstmals auch flüssige Brennstoffe verdampft und so umgewandelt werden, dass sie in Gasbrennern, Gasmotoren und Gasturbinen ohne Modifikationen eingesetzt werden. Der Brennstoff kann mit der vorliegenden Erfindung an die jeweilige Anwendung angepasst werden.

Der Verbrennungsmotor wird zumindest noch für längere Zeit die dominierende Antriebsform sein. Die Automobilindustrie steht vor einer gewaltigen Aufgabe, um eine ressourcenschonende, nachhaltige Mobilität zu gewährleisten. Die größte Herausforderung ist dabei die Reduzierung der Treibhausgase und Emissionen wie Stickoxide und Ruß. Die Rußpartikel und NOₓ-Emissionen müssen derzeit durch aufwendige Abgasnachbehandlungssysteme wie Rußpartikelfilter, SCR-Technik (Selective Catalytic Reduction) und/oder NOₓ-Speicherkatalysatoren in Verbindung mit innermotorischen Maßnahmen (gekühlte Abgasrückführung und Ladeluft) reduziert werden. Abgasnachbehandlungssysteme sind aufgrund ihrer hohen Edelmetallbeladungen der Katalysatoren und großer Komplexität teuer, erhöhen das Gewicht und den Kraftstoffverbrauch.

Derzeit untersuchen zahlreiche Firmen und Forschungseinrichtungen alternative Brennverfahren, um die Schadstoffe auch ohne bzw. mit einer reduzierten Abgasnachbehandlung abzusenken. Das größte Potential wird dabei den homogenen Brennverfahren zugeschrieben (S. Raming: "Energiemanagement in Kraftfahrzeugen", Schriften des Forschungszentrums Jülich, Reihe Energietechnik, Band 56, 2006, S. 108).

Durch das homogene Brennverfahren können innermotorisch die Stickoxid- und Rußemissionen reduziert und gleichzeitig der thermische Wirkungsgrad weiter erhöht werden. Die Herausforderung des homogenen Brennverfahrens ist die Gemischbildung, die Kontrolle der Zündverzugszeit und Zündtemperatur sowie der Einsatz bei Volllast und in volllastnahen Betriebspunkten im Motorkennfeld. Das homogene Brennverfahren kann bislang mit einem Kraftstoff nur im unteren Leistungsbereich des Motorkennfelds betrieben werden. Um den Leistungsbereich zu erweitern, muss die Kraftstoffeigenschaft dynamisch angepasst werden (X. Lu et al. Fuel design and management for the control of advanced compression-ignition combustion modes. Progress in Energy and Combustion Science 37 (2011) 741-783).

Für viele Anwendungen im Stand der Technik ist es notwendig oxidierbare flüssige Substanzen, wie z.B. Benzin, Diesel, Bioöle, ein- und mehrwertige Alkohole, Aldehyde, Ether, Carbonsäuren, Aromaten und Amine, zu verdampfen. Zusätzlich ist es für einige Anwendungen von Interesse, die Substanz nicht nur zu verdampfen, sondern gleichzeitig die Moleküle der Ausgangssubstanz in energiereiche kleinere Moleküle, wie z.B. Wasserstoff, Kohlenmonoxid oder organische Moleküle mit C-C-Doppelbindungen, aufzuspalten. Dadurch ist es möglich, die Eigenschaften der Ausgangssubstanz gezielt an die Anwendung anzupassen. Mögliche Anwendungen finden sich z.B. bei der Verbrennung in Motoren oder Brennern, bei der Reformierung, beim Aufbau chemischer Verbindungen mittels chemischer Synthesen, bei Raffinerieprozessen oder in der petrochemischen Industrie.

Bislang mussten für solche Anwendungen mehrere "unit operations" hintereinander geschaltet werden, eine für die Verdampfung der Substanz und eine für die thermische Aufspaltung der Substanz.

Für den ersten Schritt, die Verdampfung, werden nach dem Stand der Technik Vorrichtungen eingesetzt, die auf dem Prinzip der Energiezufuhr in Form von elektrischem Strom, Mikrowellen oder Wärme von außen mittels indirekter Wärmeübertragung beruhen. All diese Wege sind jedoch mit Wärmeübertragungswiderständen und Wärmeverlusten behaftet.

Wird mit elektrischem Strom oder mit Mikrowellen beheizt, bedeutet es unter exergetischen Gesichtspunkten einen hohen Aufwand, diese Energieformen bereit zu stellen. Abwärme aus einem Prozess kann in diesen Fällen nicht direkt genutzt werden. Im Falle der Energiezufuhr durch elektrischen Strom oder Mikrowellen sind Energiequellen für elektrischen Strom bzw. Mikrowellen erforderlich, was z.B. an Bord von Fahrzeugen schnell zu Limitierungen der verfügbaren Energiemenge führt.

Im Falle der Energiezufuhr in Form von Prozesswärme oder Abwärme, die in der Prozesstechnik sehr weit verbreitet ist, sind große Übertragungsflächen erforderlich, um technisch und wirtschaftlich sinnvolle Wärmströme zu erreichen (siehe z.B. Rohrbündel- oder Plattenwärmeüberträger).

Im Stand der Technik sind zwar einige Wärmeüberträger und Verdampfer mit direkter Wärmeübertragung beschrieben, doch wird hier meist lediglich die Energie von einem warmen, gasförmigen Medium bereitgestellt, das durch den Apparat strömt.

Der zweite Prozessschritt, die thermische Aufspaltung der Moleküle, ist weit verbreitet in der chemischen und vor allem in der petrochemischen Industrie. Doch auch bei Prozessen zur Abfallverwertung spielt das thermische Cracken, auch Pyrolyse genannt, eine Rolle.

Zum thermischen Cracken von Erdölfraktionen und auch zur Pyrolyse von Abfällen (Hausmüll, Plastikfraktionen, etc.) ist zahlreicher Stand der Technik bekannt. Wiederum wird in den allermeisten Fällen die Energie, die für das endotherme thermische Cracken erforderlich ist, von außen zugeführt, also von einer externen Wärmequelle.

Ein Verfahrenskonzept, bei dem die zum Cracken erforderliche Energie teilweise aus dem zu crackenden Stoff selbst stammt, ist z.B. das "Kalte Flamme"-Prinzip. Es wurde von Naidja et al. (A. Naidja, C.R. Krishna, T. Butcher, D. Mahjan, Progr. Ener. Combust. Sci. 29, 2003, 155-191) ausführlich beschrieben. Das "Kalte Flamme"-Prinzip nutzt den Effekt, dass eine unterstöchiometrische Mischung von Luft und Brennstoff chemisch reagiert und dabei leicht bläuliches Licht, die sogenannte, "Kalte Flamme" emittiert. Die Energie, die bei der partiellen Oxidation des Brennstoffs frei wird, bricht die Moleküle des Brennstoffs auf, die jedoch rasch wieder rekombinieren und dabei stabile organische Verbindungen, wie Alkohole, Peroxide, Aldehyde und Kohlenmonoxid, bilden.

In diesem Zusammenhang beschäftigen sich z.B. die EP 1 533 494 A2 sowie die US 6,872,482 E2 mit der Verwendung des "Kalte Flamme"-Prinzips bei Verbrennungsvorgängen in Motoren oder bei der Reformierung fossiler Brennstoffe zur Wasserstofferzeugung für Brennstoffzellensysteme.

Das "Kalte Flamme"-Prinzip, bei welchem kein Katalysator verwendet wird, hat jedoch den Nachteil, dass eine gewisse Temperatur von ca. 500 °C nicht überschritten werden darf, da es sonst zur Hauptwärmefreisetzung kommen kann. Die Luft muss im Reaktor zirkuliert werden. Zudem hat die kalte Flamme einen starken Druckeinfluss, der den Temperaturbereich stark einengt. Im Weiteren können schnelle Startzeiten nur mit einer hohen Startenergie erreicht werden, da der Luftstrom auf ca. 300 bis 450 °C erwärmt werden muss.

Aus DE 10 2006 060 669 A1 ist ein Verfahren bekannt, das die katalytische Verdampfung und Vergasung flüssiger Brennstoffe in der Anwendung für Heizölkessel und die Reformierung flüssiger Brennstoffe zur Umsetzung in Brennstoffzellen beschreibt.

Aus der DE 10 2010 012 945 A1 ist eine Vorrichtung zur Verdampfung von flüssigen Kraftstoffen bekannt. Die Vorrichtung verfügt über ein konzentriert um einen Lufteinlass angeordnetes Katalysatorsystem. Um das Katalysatorsystem herum ist konzentrisch poröses Material angeordnet, das den Kraft- und/oder Brennstoff aufnehmen kann. Das poröse Material ist vom Katalysatorsystem über einen dazwischen liegenden Raum getrennt. Es wird nur auf die Verdampfung des Kraft- und/oder Brennstoffs in Folge unterstöchiometrischer, katalytischer Oxidation abgestellt. Kurzkettige Kohlenwasserstoffe fallen bei dieser Art der Reaktionsführung nur als unerwünschte Nebenprodukte, in verfahrenstechnisch vernachlässigbarer Konzentration (<0,5 Vol.-%), an.

Dieses Dokument offenbart den Oberbegriff des Anspruchs 1.

Nach dem Stand der Technik ist es nicht möglich die Zündeigenschaft von oxidierbaren flüssigen Substanzen, wie z.B. Benzin, Diesel, Bioöle, ein- und mehrwertige Alkohole, Aldehyde, Ether, Carbonsäuren, Aromaten und Amine, in einem Gehäuse ohne Energiezufuhr von außen einzustellen.

Es ist somit die Aufgabe der vorliegenden Erfindung ein Verfahren und eine Vorrichtung zur Einstellung der Zündeigenschaft aus Brennstoffen anzugeben, welches die Nachteile aus dem Stand der Technik überwindet

Diese Aufgabe wird durch das mit einer Vorrichtung nach Anspruch 1 durchgeführte Verfahren zur Einstellung der Zündeigenschaft eines Brennstoffs mit den Merkmalen des Patentanspruches 3 gelöst. Patentanspruch 1 gibt zudem eine entsprechende Vorrichtung zur Einstellung der Zündeigenschaft eines Brennstoffs an.

Die jeweilig abhängigen Patentansprüche stellen vorteilhafte Weiterbildungen dar.

Das Verfahren zeichnet sich dadurch aus, dass durch das Molverhältnis von im Oxidationsmittel enthaltenen Sauerstoff zum zur vollständigen Oxidation des vorhandenen Brennstoffes benötigten Sauerstoff, die Zündeigenschaft eingestellt wird.

Alternativ oder zusätzlich kann die Einstellung der Zündeigenschaft auch durch den Druck in der Vorrichtung erfolgen.

Dabei wird nicht verkannt, dass die genannten Möglichkeiten vielfach nicht unabhängig voneinander sind. So gibt es gewisse Zusammenhänge etwa zwischen Druck und Verweilzeit.

An dieser Stelle soll der Begriff Zündeigenschaft definiert werden. Hierzu sollen zunächst die bekannten Größen Zündverzugszeit und Zündtemperatur dargestellt werden.

Die Zündtemperatur ist diejenige Temperatur, auf die man einen Stoff oder eine Kontaktoberfläche erhitzen muss, damit sich eine brennbare Substanz, sei es ein Feststoff, eine Flüssigkeit, deren Dämpfe oder Gas, in Gegenwart von Luft ausschließlich aufgrund seiner Temperatur - also ohne Zündquelle wie einen Zündfunken - selbst entzündet. Sie ist bei jedem Stoff unterschiedlich hoch und in vielen Fällen vom Druck abhängig.

Bei der Injektion eines Kraftstoff/Luft-Gemisches tritt ein Verzug zwischen der Injektion und dem Beginn der Hauptwärmefreisetzung auf. Dieses Zeitintervall kennzeichnet die Zündverzugszeit. Die Zündverzugszeit setzt sich aus radikalinduzierten Zeitintervallen zusammen und ist für jeden Brennstoff spezifisch und ist abhängig von Druck und Temperatur.

Die Cetanzahl beschreibt die Zündwilligkeit eines Kraftstoffes. Je höher die Cetanzahl desto zündwilliger ist der Kraftstoff. Dieses Verhalten ist bei Dieselmotoren erwünscht, verursacht aber aufgrund der molekularen Zusammensetzung und des Brennverfahrens hohe Ruß- und Stickoxidemissionen. Die Oktanzahl ist reziprok zu der Cetanzahl, eine hohe Oktanzahl bedeutet, dass der Brennstoff zündunwilliger ist. Benzin bspw. hat eine hohe Oktanzahl und muss im Motor über eine Fremdzündung, normalerweise eine Zündkerze, gezündet werden. Für alternative Brennverfahren ist es erforderlich, die Zündwilligkeit dynamisch anzupassen, bei niedrigen Lasten muss der eingesetzte Brennstoff eher zündwillig sein, mit höheren Lasten soll dagegen die Zündwilligkeit herabgesetzt werden. Die Cetanzahl wird in einem standardisierten Verfahren bei einem Druck und einer Temperatur bestimmt. Die Cetanzahl (oder Oktanzahl) ist deshalb nicht geeignet, um den gesamten Brennverlauf zu beschreiben. Es muss deshalb ein detaillierter Verlauf der Zündverzugszeit in Abhängigkeit von Druck und Zündtemperatur bestimmt werden. Nur so können dynamische Verbrennungsprozesse ausreichend beschrieben werden. In der vorliegenden Erfindung kann die Zündverzugszeit und die Zündtemperatur mit dem Verfahren und der Vorrichtung im gesamten Druck und Temperaturbereich dynamisch zwischen Diesel, Benzin und darüber hinaus eingestellt werden.

Vorliegend wird gerade nicht auf die bei Standardbedingungen bestimmte Cetanzahl abgestellt, sondern es interessiert die Zündverzugszeit und/oder Zündtemperatur bei den verschiedenen, regelmäßig von den Standardbedingungen abweichenden, Werten von Druck und Temperatur. Insofern wird allgemein von der Zündeigenschaft des Brennstoffs gesprochen. Aus der Zündeigenschaft ergeben sich dann bei den jeweiligen Werten von Druck und Temperatur die Zündverzugszeit und/oder die Zündtemperatur.

Die gezielte Wahl des Molverhältnisses und/oder der anderen genannten Parameter erlaubt eine Beeinflussung der Zündeigenschaft. Das Verfahren erlaubt also eine gezielte Beeinflussung der Eigenschaften von Brennstoff und damit eine Anpassung des Brennstoffs an die jeweiligen Anforderungen. Insbesondere bei Verbrennungsmotoren sind die Anforderungen an den Brennstoff für eine optimale Verbrennung von der Last abhängig. Daher bringt ein vergleichsweise einfaches Verfahren zur Anpassung des Brennstoffs an die jeweiligen Anforderungen deutliche Vorteile.

Erfindungsgemäß kann in der Verteilungszone eine Verdampfung von flüssigem Brennstoff erfolgen. Insoweit kann die Verteilungszone auch als Verdampfungszone bezeichnet werden. Im Regelfall sollte der Brennstoff in der Oxidationszone und in der Umwandlungszone zumindest überwiegend gasförmig vorliegen. Wie nachfolgend dargestellt, kann dies auch energetisch günstig erfolgen.

Erfindungsgemäß wird zumindest ein Teil der durch die Oxidation entstehenden Wärme in die Verteilungszone und in einer Ausführungsform in die Umwandlungszone übertragen. Damit kann die bei der Oxidation freiwerdende Wärme effizient genutzt werden. Es versteht sich, dass in der Verteilungszone vor allem dann Wärme benötigt wird, wenn dort eine Verdampfung erfolgt.

Erfindungsgemäß wird die Wärme durch Konvektion und/oder Strahlung übertragen. Wärmeleitung ist nicht auszuschließen, spielt in der Regel aber eine untergeordnete Rolle. Im Regelfall stehen Oxidationszone, Verteilungszone und Umwandlungszone in Strahlungskontakt, so dass ein gewisser Wärmeaustausch durch Strahlung erfolgt. Entscheidend kommt aber hinzu, dass ein Wärmeaustausch durch Konvektion erfolgt. Dies setzt freilich voraus, dass eine Strömung von der Oxidationszone in die Verteilungszone und Umwandlungszone erfolgt. Eine Strömung von der Oxidationszone in die Umwandlungszone ist im Stand der Technik bekannt und ergibt sich allein daraus, dass die Umwandlung der Oxidation folgt und der teilweise oxidierte Brennstoff in die Umwandlungszone strömt. Eine Strömung von der Oxidationszone in die Verteilungszone, die wie dargestellt bei flüssigen Brennstoffen zugleich die Verdampfungszone ist, ist hingegen nicht bekannt. Im Normalfall ist allenfalls eine Strömung von der Verteilungszone in die Umwandlungszone bekannt. Wenngleich eine derartige Strömung auch vorliegend erfolgen muss, ist es ein wesentlicher Beitrag auch eine Strömung von der Oxidationszone in die Verteilungszone zu bewirken. Dabei ist klar, dass es unterschiedliche Bereiche zwischen Oxidationszone und Verteilungszone geben muss, so dass Bereiche vorhanden sind, in denen eine Strömung von der Oxidationszone in die Verteilungszone erfolgt und weitere Bereiche vorhanden sind, in denen eine Strömung von der Verteilungszone in die Oxidationszone auftritt.

Unter üblichen Bedingungen erfolgt etwa die Hälfte der Wärmeübertragung durch Konvektion, während die andere Hälfte durch Wärmestrahlung erfolgt. Auch in Absatz [0017] der DE 10 2006 060 669 A1 wird eine Wärmekonvektion vom Katalysator durch den mit Brennstoffdampf und Luft gefüllten Abstand zur Schicht mit Brennstoff erwähnt. Bei näherer Betrachtung, insbesondere der Figur 1 der DE 10 2006 060 669 A1 ist jedoch zu erkennen, dass es sich um einen untergeordneten Effekt handelt. Entsprechend ist am Ende von Absatz [0017] der DE 10 2006 060 669 A1 auch erwähnt, dass die Wärmestrahlung überwiegt.

Erfindungsgemäß wird das Oxidationsmittel so auf die Verteilungszone geleitet, dass dieses anschließend zusammen mit dem Brennstoff in die Oxidationszone und/oder Umwandlungszone geleitet wird. Dabei ist zu beachten, dass das Oxidationsmittel als Teil eines Gemischs zur Verteilungszone strömen kann. Durch diese Strömung wird die oben beschriebene Wärmekonvektion erzielt.

In einer Ausführungsform wird die für die Verdampfung und thermische und/oder katalytische Umwandlung erforderliche Energie im Wesentlichen durch die Oxidation gewonnen. Dies soll nicht ausschließen, dass insbesondere in der Startphase eine zusätzliche Beheizung erforderlich ist. Solange kein gegebenenfalls verdampfter Brennstoff vorliegt, der oxidiert werden kann, ist auch keine Wärme aus der Oxidation vorhanden, die zur Verdampfung genutzt werden kann. Von derartigen Sondersituationen abgesehen ist es möglich die zur Verdampfung und zur Umwandlung erforderliche Energie aus der Oxidation zu gewinnen.

In einer Ausführungsform werden insbesondere in der Oxidationszone Oxidationsmittel, Brennstoff und Zwischenprodukte vermischt. Dies erfolgt vor allem in Zusammenhang mit der oben genannten Strömung von der Oxidationszone in die Umwandlungszone und umgekehrt. Durch diese Strömungsverhältnisse erfolgen besondere, im Stand der Technik nicht bekannte Durchmischungen, welche zur Umwandlung des Brennstoffs und damit zur Einstellung der Zündeigenschaft beitragen. Die dabei entstehenden und strömenden Gasgemische können zur Wärmeübertragung durch Konvektion beitragen.

In einer Ausführungsform enthält das Oxidationsmittel Sauerstoff oder sauerstoffhaltige Medien, insbesondere Luft oder Abgase mit Restsauerstoff. Zur Oxidation ist es also nicht erforderlich, dass besonders reiner Sauerstoff vorliegt. Es genügt Luft und in vielen Fällen sogar Abgas mit Restsauerstoff

In einer Ausführungsform beträgt der Druck in der Einheit 0,01 bis 100 bar, bevorzugt zwischen 0,01 - 50bar, besonders bevorzugt 0,05 bis 10 bar. Diese Druckbereiche haben sich bewährt. Beim angegebenen Druck handelt es sich um einen Überdruck im Vergleich zur Umgebung.

In einer Ausführungsform ist der Brennstoff ausgewählt aus Brennstoffen wie Benzin, Diesel, Bioöle, Pyrolyseöle, Biodiesel, Schweröl, Alkohole, Fischer-Tropsch-Kraftstoffe, Dimethylether, Diethylether, Oxymethylenether (OME1 - OME10 und Mischungen), Ester, Aldehyde, Aromate, Amine, Carbonsäuren, Alkane - hier vor allem Methan, Ethan, Propan, Butan - Erdgas, Fackelgase, Deponiegase, Biogase und Mischungen hieraus. Anhand der genannten Beispiele wird klar, dass es sich normal um flüssige oder gasförmige Brennstoffe handelt. Die Nutzung fester Brennstoffe soll nicht ausgeschlossen werden, dürfte sich wegen der Handhabung aber schwierig gestalten.

In einer Ausführungsform beträgt das Molverhältnis von im Oxidationsmittel enthaltenen Sauerstoff zum zur vollständigen Oxidation des vorhandenen Brennstoffes benötigten Sauerstoff von 0,03 bis 0,9, bevorzugt von 0,05 bis 0,4 besonders bevorzugt von 0,1 bis 0,3, beträgt. Derartige Werte haben sich bewährt.

In einer Ausführungsform wird die Zündeigenschaft zusätzlich über mindestens einen der folgenden Parameter eingestellt:
die Abstände zwischen Oxidationsmitteleinlass, Katalysator und Verdampferstruktur,
Position und/oder Dimension und /oder Anzahl und/oder Form des Oxidationsmittel- und Brennstoffeinlasses,
Strömungsfeld des Oxidationsmittels
Struktur und Zelldichte des Katalysatorträgers
dem Katalysatormaterial sowie dessen Verteilung auf dem Katalysatorträger Anordnung und Form des Auslasses.

Hierzu ist darzustellen, dass mehrere Einlässe vorgesehen werden können, die geschlossen und geöffnet werden können, wobei auch ein teilweises Öffnen oder Schließen möglich ist. Der Oxidationsmittel- und Brennstoffeinlass kann beispielsweise, rund, flach oder eckig sein. Damit kann eine Beeinflussung des Verfahrens erfolgen.

Das Strömungsfeld des Oxidationsmittels beschreibt an welcher Stelle, in welcher Richtung mit welcher Geschwindigkeit Oxidationsmittel fließt. Dies ist letztlich abhängig von den geometrischen Bedingungen, also Aufbau der Einheit, Abstände der Einlässe und dergleichen sowie des eingestellten Volumenstroms und des vorherrschenden Drucks.

Es ist zu beachten, dass manche Parameter von der genutzten Vorrichtung abhängen und daher während des Betriebs nicht beeinflusst werden können. Dazu gehört etwa normalerweise die Struktur und Zelldichte des Katalysatorträgers. Anders verhält es sich etwa mit Einlässen, die während des Betriebs geschlossen und geöffnet werden können.

Auch die Anordnung und Form des Auslasses ist grundsätzlich durch die Einheit vorgegeben. Freilich wäre auch hier denkbar etwa ein in die Einheit ragendes Rohr mit verschiedenen schaltbaren Öffnungen vorzusehen. Würde etwa eine weiter hineinragende Öffnung geöffnet, könnte damit gleichsam die Umwandlungszone verkürzt werden. Dies könnte in manchen Betriebszuständen gewünscht sein.

In einer Ausführungsform wird der umgewandelte Brennstoff einer Verbrennungseinrichtung, bevorzugt einem Verbrennungsmotor, wie z.B. einem Benzinmotor, einem Dieselmotor oder einem Gasmotor, einer Turbine oder einem Brenner zugeführt.

In einer Ausführungsform wird der umgewandelte Brennstoff einer Abgasnachbehandlungseinrichtung zugeführt. Vielfach ist es üblich dem Abgas in ausgewählten Zeitabschnitten Brennstoff zuzuführen. Dazu werden verbreitet Injektoren genutzt, welche dem Abgas zwischen Motor und Oxidationskatalysator Brennstoff zugeben. Dieser Brennstoff kann zu einer erhöhten Wärmefreisetzung in einem Oxidationskatalysator führen und den Abgasstrom aufheizen. Dieser aufgeheizte Abgasstrom kann dazu dienen Ruß, der sich an einem Rußpartikelfilter befindet, abzubrennen. Damit wird der Rußpartikelfilter regeneriert.

Um diese Wärmefreisetzung zu ermöglichen darf eine sogenannte Anspringtemperatur des Oxidationskatalysators nicht unterschritten werden. Durch Einsatz des umgewandelten Brennstoffs anstelle von konventionellem Brennstoff kann diese Anspringtemperatur abgesenkt werden. Damit entfällt oft die Notwendigkeit den Oxidationskatalysator zu beheizen. Dies ist bisher deshalb oft notwendig, da durch innermotorische Maßnahmen wie Abgasrückführung und hohe Aufladungen die Abgastemperatur nach dem Motor zunehmend sinkt.

Eine effiziente Abgasnachbehandlung ist daher im Stand der Technik nicht immer möglich. Durch den umgewandelten Brennstoff kann eine ausreichende Anhebung der Abgastemperatur leichter erfolgen. Damit kann eine signifikante Senkung des Schadstoffausstoßes erreicht werden. Dies ist vor allem bei niedriger Betriebstemperatur und/oder niedriger Last gegeben. Dies tritt bei Kraftfahrzeugen oft im innerörtlichen Betrieb auf, bei dem die Schadstoffe für den Menschen besonders schädlich sind.

Der umgewandelte Brennstoff kann ferner dazu dienen, Stickoxide in Speicherkatalysatoren in einem breiten Temperaturfenster zu reduzieren. Dadurch werden Stickoxide auch bei tiefen Abgastemperaturen zuverlässig reduziert.

Die Erfindung betrifft auch eine Vorrichtung zur Einstellung der Zündeigenschaft mindestens eines Brennstoffs, ausgebildet die Zündwilligkeit des Brennstoffs durch Änderung der chemischen Zusammensetzung zu senken, enthaltend mindestens einen Brennstoffeinlass und mindestens einen Oxidationsmitteleinlass.

Ferner ist mindestens eine Verteilungszone zur Verteilung des Brennstoffs mit mindestens einer Verteilerstruktur für den Brennstoff, mindestens eine Oxidationszone zur zumindest teilweisen Oxidation des Brennstoffs enthaltend mindestens einen Katalysatorträger mit mindestens einem Katalysator,
mindestens eine Umwandlungszone zur zumindest teilweisen katalytischen und/oder thermischen Umwandlung des Brennstoffs und mindestens einem Auslass für Brennstoff mit veränderter Zündeigenschaft vorgesehen.

Dabei sind der Oxidationsmitteleinlass, der Katalysatorträger und die Verteilungszone so angeordnet und ausgestaltet, dass in der Oxidationszone entstandene Wärme an ein in die Verteilungszone und/oder Umwandlungszone strömendes Gas oder Gasgemisch übertragen werden kann.

Zur Vermeidung von Wiederholungen wird ergänzend zu den nachfolgenden Betrachtungen auf die Beschreibung des Verfahrens verwiesen.

Zunächst soll klargestellt werden, dass sich die Vorrichtung wie das Verfahren nicht nur für jeweils einen reinen Brennstoff eignet. Es ist durchaus möglich verschiedene Brennstoffe oder Brennstoffgemische zu verarbeiten.

Der Anordnung und Ausgestaltung von Oxidationsmitteleinlass, Katalysatorträger und Verteilungszone in einer Weise, dass in der Oxidationszone entstandene Wärme an ein in die Verteilungszone und/oder Umwandlungszone strömendes Gas oder Gasgemisch übertragen werden, kommt besondere Bedeutung zu. Damit ist es möglich einen gezielten Wärmetransport von der Oxidationszone in die Verteilungszone und in die Umwandlungszone zu bewirken. Da vom Ablauf des Prozesses vor der Oxidation zunächst eine Verteilung, im Falle flüssiger Brennstoffe auch eine Verdampfung, in der Verteilungszone erfolgt, ergibt sich eine derartige Strömung nicht von selbst, vielmehr ist eine bewusste Anordnung erforderlich. Bei dem strömenden Gas oder Gasgemisch handelt es sich im Regelfall um das aus dem Oxidationsmitteleinlass stammende Gas oder Gasgemisch, welches durch die Oxidationszone oder entlang der Oxidationszone in die Verteilungszone strömt. Freilich können sich auch Vermischungen, etwa mit bereits oxidiertem Brennstoff oder mit Zwischenprodukten der Oxidation und der Umwandlungsreaktionsprodukte ergeben.

Dabei ist es möglich, dass die Vorrichtung genau eine Reaktionskammer enthält, wobei die Reaktionskammer die mindestens eine Verteilungszone, die mindestens eine Oxidationszone und die mindestens eine Umwandlungszone aufweist. Im Regelfall ist die Vorrichtung in einem Gehäuse untergebracht.

Wenngleich von einem Auslass für Brennstoff mit veränderter Zündeigenschaft gesprochen wird, muss klar sein, dass durch den Auslass auch andere Gase, etwa nicht umgewandelter, in zugeführter Luft enthaltener Stickstoff, strömen kann.

Wie bereits erwähnt ist erfindungsgemäß die Verteilungszone derart ausgebildet, dass flüssiger Brennstoff in der Verteilungszone verdampft werden kann.

Erfindungsgemäß ist der Katalysatorträger so zwischen der Verteilerstruktur für den Brennstoff und dem Oxidationsmitteleinlass angeordnet, dass aus dem Oxidationsmitteleinlass strömendes Gas oder Gasgemisch so auf die Verteilungszone geleitet wird, dass dieses anschließend zusammen mit dem Brennstoff in die Oxidationszone und/oder Umwandlungszone abgeleitet wird.

Zunächst ist darzustellen, dass am Oxidationsmitteleinlass in der Regel Luft eingeblassen wird, also ein Gasgemisch, welches als Oxidationsmittel Luft enthält. In jedem Fall enthält das eingeblasene Gas oder Gasgemisch Oxidationsmittel, normalerweise Sauerstoff. Im Regelfall wird aber kein reiner Sauerstoff eingeblasen, sondern wie erwähnt Luft.

Die geschilderte Ausführungsform wird im Regelfall dadurch realisiert, dass Luft auf einer der Verteilungszone abgewandten Seite des Katalysatorträgers eingeblasen wird und durch den Katalysatorträger hindurch zur Verteilungszone strömt. Freilich gibt es eine Vielzahl weiterer Varianten. So kann auch der Katalysatorträger derart angeströmt werden, dass das Gas oder Gasgemisch, welches Oxidationsmittel enthält, vom Katalysatorträger wieder abprallt und in die Verteilungszone strömt, wobei Wärme vom Katalysatorträger aufgenommen und in die Verteilungszone transportiert wird.

Erfindungsgemäß weist der Katalysatorträger Strömungskanäle auf, die ein Strömen des Oxidationsmittels bis zur Verteilungszone begünstigen. Wichtig ist dabei meist freilich, dass dennoch Wärme vom Katalysatorträger auf das strömende Oxidationsmittel übertragen werden kann.

Erfindungsgemäß enthält der Katalysatorträger eine offenporöse Struktur oder Strömungskanäle. Diese soll ebenfalls das Strömen des Oxidationsmittels begünstigen. Der Katalysatorträger kann hierzu beispielsweise keramisch oder metallisch sein. In Betracht kommen eine Schaumstruktur oder eine Wabenstruktur. Es können Strömungskanäle ausgebildet sein mit einer Zelldichte von mindestens 50 - 1000 Zellen pro Quadratinch, bevorzugt zwischen 200 - 600 Zellen pro Quadratinch. Die Schaumstruktur hat bevorzugt eine Porosität von 20 bis 98%, besonders bevorzugt zwischen 50% - 95%.

In einer Ausführungsform sind die Verteilerstruktur für den Brennstoff und der Katalysatorträger planar und/oder konzentrisch aufgebaut sind, wobei eine modulare Bauweise mit sich mehrfach wiederholender Anordnung möglich ist. Dies kann bei Bedarf in einem Stack erfolgen. Dadurch kann eine sehr große thermische Eingangsleistung in einer kompakten Einheit umgesetzt werden. Es können dadurch ebenfalls sehr große Verdampferleistungen realisiert werden. Dies ist mit dem bisherigen Stand der Technik nicht erreichbar.

In einer Ausführungsform ist eine Anordnung in einem Stack möglich. Geschützt werden soll auch die tatsächliche Anordnung in einem Stack. Durch Anordnung in einem Stack ist eine kompakte Ausführung möglich.

In einer Ausführungsform ist die Verteilerstruktur für den Brennstoff durch ein an der Innenwand des Gehäuses angeordnetes Vlies und/oder eine Strukturierung an der Gehäuseinnenwand gebildet. Damit kann bei flüssigen Brennstoffen die Fließgeschwindigkeit reduziert werden, so dass mehr Zeit zur Verdunstung zur Verfügung steht.

In einer Ausführungsform sind in mehreren Ebenen und/oder pro Ebene an mehreren Stellen Oxidationsmitteleinlässe angeordnet, wobei die Oxidationsmitteleinlässe in Form von Löchern und/oder Schlitzen ausgeführt sein können, und so positioniert sind, dass das Oxidationsmittel entlang und/oder durch den Katalysatorträger strömen kann. Wiederum ist klarzustellen, dass das Oxidationsmittel als Teil eines Gas oder Gasgemischs strömen kann.

Ebenso sind in einer Ausführungsform in mehreren Ebenen und/oder pro Ebene an mehreren Stellen Brennstoffeinlässe angeordnet, wobei die Brennstoffeinlässe in Form von Löchern und/oder Schlitzen aufgeführt sein können und so positioniert sind, dass der Brennstoff in die Verteilungszone strömen kann.

In einer Ausführungsform kann die Vorrichtung vertikal, horizontal oder geneigt betrieben werden. Damit gibt es mehr Freiheitsgrade zum Einbau der Vorrichtung. Zudem ermöglicht dies wie schon ausgeführt beim Einsatz in einem Kraftfahrzeug

In einer Ausführungsform ist eine zusätzliche Heizvorrichtung, insbesondere eine elektrische Heizvorrichtung, vorhanden. Denkbar ist auch der Einsatz von heißem Abgas zur Unterstützung der Beheizung. Die zusätzliche Heizvorrichtung dient vor allem für den Start.

In einer Ausführungsform ist die Vorrichtung derart ausgebildet, dass der aus der Vorrichtung austretende Brennstoff einer Verbrennungseinrichtung, bevorzugt einem Verbrennungsmotor, beispielweise einem Benzinmotor, einem Dieselmotor oder einem Gasmotor, einer Turbine oder einem Brenner zugeführt werden kann. Damit kann beim Betrieb der Verbrennungseinrichtung eine Schadstoffreduktion im Abgas erreicht werden.

Die vorliegende Erfindung wird anhand der nachfolgenden Figuren näher erläutert ohne die Erfindung auf die hier dargestellten spezifischen Ausführungsformen zu beschränken. Dabei zeigen
Fig. 1 anhand einer schematischen Darstellung das erfindungsgemäße Verfahren,
Fig. 2 eine dreidimensionale Darstellung der erfindungsgemäßen Vorrichtung,
Fig. 3 eine Schnittdarstellung von Fig.2.,
Fig. 4 anhand einer schematischen Darstellung die erfindungsgemäße Vorrichtung in Stackbauweise,
Fig. 5 anhand eines Diagramms den Einfluss des Drucks auf die Verteilung der Alkane im Brennstoff,
Fig. 6 anhand eines Diagramms den Einfluss des Drucks auf die Verteilung der Alkene im Brennstoff,
Fig. 7 anhand eines Diagramms den Einfluss des Drucks auf die Verteilung der Aromate im Brennstoff
Fig. 8 anhand eines Diagramms den Einfluss der Luftzahl auf die Verteilung der Alkane,
Fig. 9 die Änderung der Zündeigenschaft von Diesel zu einem Brennstoff mit Zündeigenschaften ähnlich Superbenzin

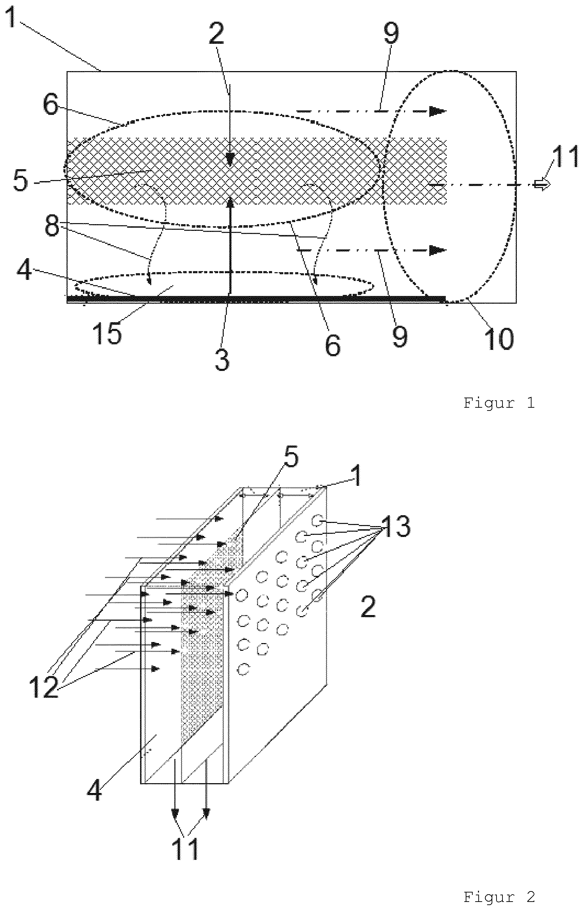

In Figur 1 ist anhand einer schematischen Darstellung das erfindungsgemäße Verfahren dargestellt. Dazu ist ein Gehäuse 1 vorhanden. Auf einer Seite des Gehäuses 1 wird Luft 2 eingeblasen, welche den als Oxidationsmittel dienenden Sauerstoff enthält. Auf der anderen Seite wird Brennstoff 3 eingebracht. Der Brennstoff 3 gelangt in eine Verteilungszone 15 in der sich ein als Verteilungsstruktur dienendes Vlies 4 befindet. Der Brennstoff 3 verdampft im Vlies 4 und strömt zum Katalysatorträger 5, der in der Oxidationszone 6 liegt, in der eine Oxidation erfolgt. Auf dem Katalysatorträger 5 befindet sich edelmetallisches Katalysatormaterial, z.B. Platin auf einem gamma-Aluminiumoxid. Zugleich strömt die Luft 2 durch den Katalysatorträger 5 und überträgt dabei durch Konvektion Wärme zum Vlies 4, die zur Verdampfung des Brennstoffs 3 dient. Der Wärmetransport erfolgt zusätzlich durch Wärmestrahlung und ist durch die Pfeile 8 dargestellt. Zwischen Katalysatorträger 5 und Vlies 4 gibt es also sowohl eine Strömung vom Katalysatorträger 5 zum Vlies 4 wie auch vom Vlies 4 zum Katalysatorträger 5. Einzelheiten hierzu werden später nochmals erläutert. Darüber hinaus gibt es eine durch die Pfeile 9 dargestellte Strömung in Richtung einer Umwandlungszone 10. In der Umwandlungszone 10 findet eine thermische und katalytische Umwandlung des verdampften Brennstoffs 3 statt. Schließlich verlässt umgewandelter Brennstoff 11, also Brennstoff mit veränderten Zündeigenschaften das Gehäuse 1.

In Figur 2 ist eine dreidimensionale Ansicht gezeigt, aus der die Brennstoffzufuhr und Oxidationsmittelzufuhr näher hervorgeht. In einer Wand des Gehäuses 1 sind eine Vielzahl von Brennstoffeinlässen 12, dargestellt durch Pfeile, vorhanden. In der Wand, die gegenüber der Wand mit den Brennstoffeinlässen 12 liegt, befinden sich viele Oxidationsmitteleinlässe 13. Man könnte auch von Lufteinlässen sprechen, da Luft 2, welche Sauerstoff als Oxidationsmittel enthält, eingeblasen wird. Somit wird also erreicht, dass in mehreren Ebenen Oxidationsmittel, besser gesagt Luft 2 enthaltend Sauerstoff als Oxidationsmittel, strömen kann.

Zu erkennen ist wiederum, dass zwischen den Wänden mit Brennstoffeinlässen 12 und Oxidationsmitteleinlässen 13, also im Gehäuse 1, der Katalysatorträger 5 angeordnet ist. An der Wand mit den Brennstoffeinlässen 12 ist auch das Vlies 4 zu erkennen.

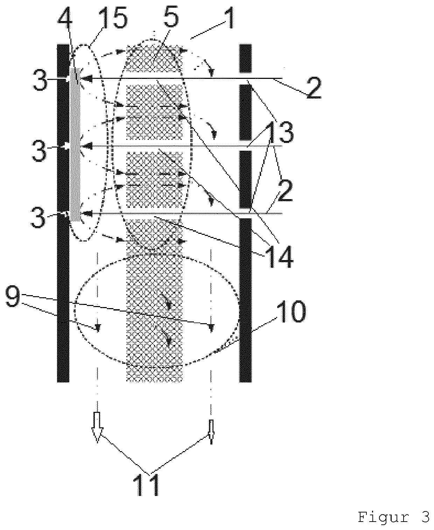

Die sich im Gehäuse 1 einstellende Strömung ist in Figur 3 zu erkennen. Die Luft 2 strömt durch die Oxidationsmitteleinlässe 13 in das Gehäuse 1. Es sind hier nur beispielhaft drei Oxidationsmitteleinlässe 13 in drei Ebenen dargestellt. Die Luft 2 strömt in diesen Bereichen durch den Katalysatorträger 5 zum Vlies 4, in dem der Brennstoff 3 verteilt wird und verdampft. In diesen Bereichen sind im Katalysatorträger 5 Strömungskanäle 14 angeordnet, welche die Durchströmung des Katalysatorträgers 5 begünstigen. Bei der Durchströmung des Katalysatorträgers 5 nimmt die Luft bei der Oxidation freiwerdende Wärme auf. Die Wärmeleitung im Katalysatorträger 5 ermöglicht, dass die Wärme zu den Strömungskanälen transportiert wird und dort auf die Luft 2 übertragen wird. Die in den Strömungskanälen 14 erwärmte Luft strömt zum Vlies 4. Dort erfolgt die Verdampfung des Brennstoffs 3. Ein Gemisch aus Luft 2 und verdampftem Brennstoff 3 strömt wieder zurück zum Katalysatorträger 5, damit dort die Oxidation des Brennstoffs 3 erfolgen kann. Der in der Luft 2 vorhandene Sauerstoff dient als Oxidationsmittel. Die Rückströmung erfolgt dabei wie ersichtlich zu den Bereichen zwischen den Strömungskanälen 14. Dabei erfolgt auch eine Strömung durch den Katalysatorträger 5 hindurch auf die dem Vlies 4 abgewandte Seite. Von dort erfolgt eine Strömung zu den Strömungskanälen 14. Es ergeben sich also die durch die Pfeile dargestellten Walzen, derart dass in den Strömungskanälen 14 und deren Verlängerung eine Strömung von den Oxidationsmitteleinlässen 13 durch den Katalysatorträger 5 zum Vlies 4 erfolgt während in den anderen Bereichen ein Rückströmung erfolgt.

Hinzu kommt noch, dass eine Strömung 9 in Richtung Umwandlungszone 10 erfolgt. Somit ergibt sich eine Strömung in Richtung der Umwandlungszone 10, in der der Brennstoff katalytisch und thermisch weiter umgewandelt wird und schließlich als Brennstoff 11 mit veränderten Zündeigenschaften das Gehäuse 1 durch einen nicht dargestellten Ausgang verlässt und zu einem Verbrennungsmotor geführt wird.

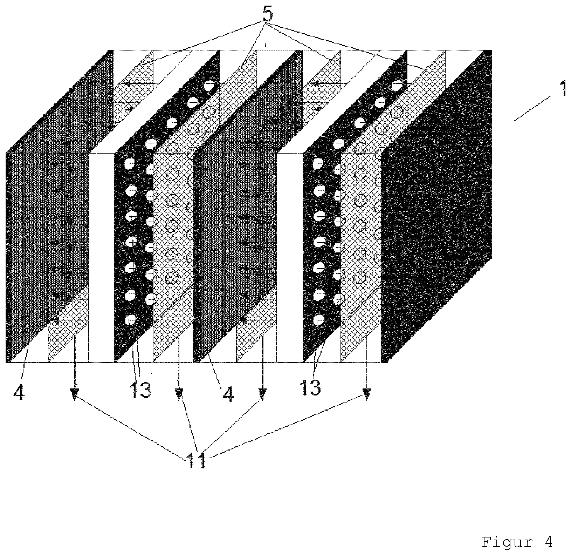

In Figur 4 wird der Aufbau eines Stacks 15 gezeigt. Im Stack 15 sind mehrere der vorgeschilderten Anordnungen nebeneinander angeordnet. Die Pfeile zeigen die Strömungsrichtung des umgewandelten Brennstoffs 11.

Nun sollen die stattfindenden Umwandlungen und Reaktionen für ein Beispiel detaillierter beschrieben werden. Als Ausgangsprodukt wird Diesel und Luft eingesetzt. Die Gewichtsanteile bezogen auf die Summe an Diesel und Luft sind dabei wie folgt: Alkane 22,1%, Alkene 0,6%, Aromate 7,9% und Stickstoff 51,9%.

Im Zuge der Oxidationsprozesse erfolgt teilweise eine partielle Oxidation, die im austretenden Brennstoff 11 mit veränderten Zündeigenschaften zu einem Gewichtsanteil von 0,2% Wasserstoff und 5,7% Kohlenmonooxid führt. Totaloxidationsanteile führen zu einem Gewichtsanteil von 6,9% Wasser und 8,8% Kohlendioxyd. Die Crackreaktionen, also Umwandlungsreaktionen, führen zu einem Gewichtsanteil von 3,1% Alkanen, 12,5% Alkenen und 2,8% Aromaten. Mithin hat der austretenden Brennstoff 11 mit veränderten Zündeigenschaften eine deutlich andere Zusammensetzung als die zugeführte Luft 2 und der zugeführte Brennstoff 3. Lediglich der Gewichtsanteil des Stickstoffs bleibt mit 51,9% gleich.

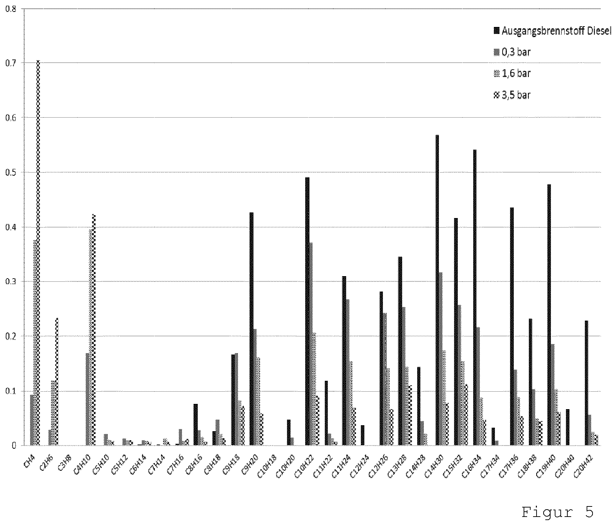

Aus Figur 5 wird ersichtlich, dass bei Verwendung von Diesel als zugeführtem Brennstoff 3 im Brennstoff 11 mit veränderten Zündeigenschaften unterschiedliche Konzentrationen von Alkanen auftreten. Auf der Rechtswertachse ist dabei die Anzahl der C-Atome des jeweiligen Alkans aufgetragen und auf der Hochwertachse der Massenstrom. Die unterschiedlichen Schattierungen geben an welcher Druck im Gehäuse 1 vorhanden ist. Die Zusammensetzung des Brennstoffs 11 mit veränderter Zündeigenschaft hängt also entscheidend vom Druck ab, bei dem die Reaktionen stattfinden.

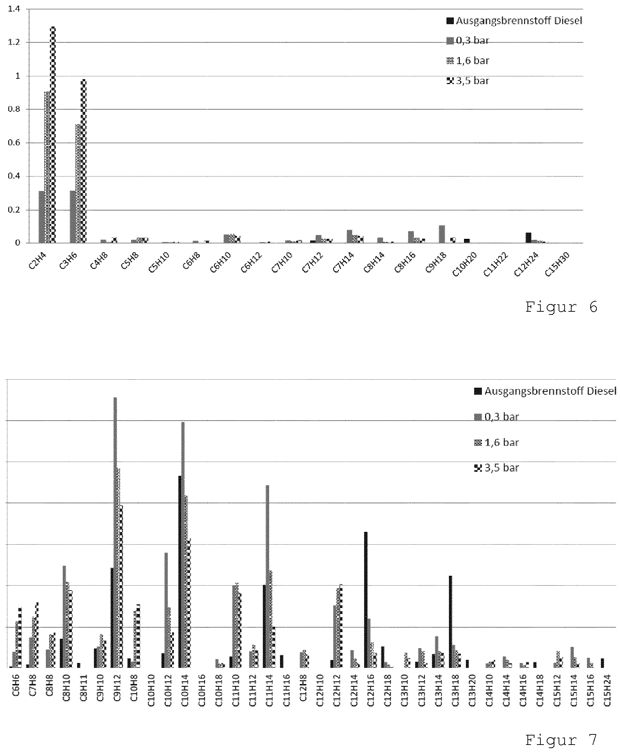

In den Figuren 6 bis 8 ist ebenfalls auf der Rechtswertachse die Anzahl der C-Atome und auf der Hochwertachse der Massenstrom aufgetragen. Die unterschiedlichen Schattierungen in Figuren 6 und 7 zeigen die unterschiedlichen Drücke bei den Reaktionen an. In Figur 6 ist die Verteilung der Alkene und in Figur 7 die Verteilung der Aromate aufgezeigt.

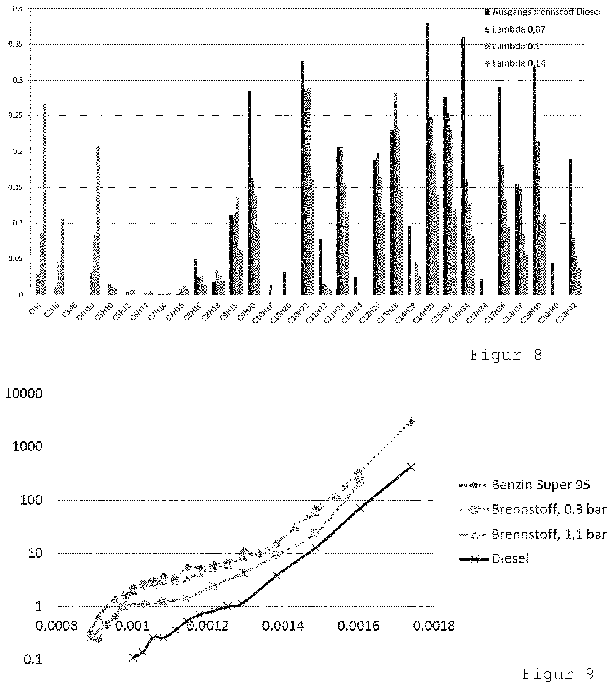

Die unterschiedlichen Schattierungen in Figur 8 zeigen die unterschiedlichen Luftzahlen an, also das unterschiedliche Massenverhältnis von Luft 2 und Brennstoff 3.

In Figur 9 ist auf der Hochwertachse die Zündverzugszeit in ms und auf der Rechtswertachse der Kehrwert der Zündtemperatur in 1/K aufgetragen. Die rechts gelegene durchgehende schwarze Kurve zeigt den Verlauf von unverändertem Diesel. Die graue Kurve mit Quadraten zeigt den Verlauf von Brennstoff mit veränderten Zündeigenschaften, wobei die Veränderung bei einem Druck von 0,3 bar erfolgt ist. Die graue Kurve mit Dreiecken zeigt den Verlauf, wenn die Umwandlung bei einem Druck von 1,1 bar erfolgt ist. Die graue Kurve mit Rauten zeigt den Verlauf von unverändertem Superbenzin mit einer Oktanzahl von 95. Es ist also zu erkennen, dass die Zündeigenschaft von Diesel durch das Verfahren der Zündeigenschaft von Superbenzin angenähert werden kann.

## Patentansprüche

1. Vorrichtung zur Einstellung der Zündeigenschaft mindestens eines Brennstoffs (3), ausgebildet die Zündwilligkeit des Brennstoffs durch Änderung der chemischen Zusammensetzung zu senken, enthaltend
• mindestens einen Brennstoffeinlass (12) und mindestens einen Oxidationsmitteleinlass (13),
• mindestens eine Verteilungszone (15) zur Verteilung des Brennstoffs (3) mit mindestens einer Verteilerstruktur (4) für den Brennstoff (3),
• mindestens eine Oxidationszone (6) zur zumindest teilweisen Oxidation des Brennstoffs (3) enthaltend mindestens einen Katalysatorträger (5) mit mindestens einem Katalysator,
• mindestens eine Umwandlungszone (10) zur katalytischen und/oder thermischen Umwandlung des Brennstoffs (3) und
• mindestens einem Auslass für Brennstoff (11) mit veränderter Zündeigenschaft
wobei der Oxidationsmitteleinlass (13), der Katalysatorträger (5) und die Verteilungszone (15) so angeordnet und ausgestaltet sind, dass in der Oxidationszone (6) entstandene Wärme an ein in die Verteilungszone (15) strömendes Gas oder Gasgemisch (2) übertragen werden kann, wobei die Verteilungszone (15) derart ausgebildet ist, dass flüssiger Brennstoff (3) in der Verteilungszone (15) verdampft werden kann,
**dadurch gekennzeichnet, dass** der Katalysatorträger (5) so zwischen der Verteilerstruktur (4) für den Brennstoff (3) und dem Oxidationsmitteleinlass (13) angeordnet ist, dass aus dem Oxidationsmitteleinlass (13) strömendes Gas oder Gasgemisch (2) so auf die Verteilungszone (15) geleitet wird, dass dieses anschließend zusammen mit dem Brennstoff (3) in die Oxidationszone (6) und/oder Umwandlungszone (10) abgeleitet wird,
wobei der Katalysatorträger (5) eine offenporöse Struktur oder Strömungskanäle (14) aufweist, die ein Strömen des Oxidationsmittels (2) bis zur Verteilungszone begünstigen.

2. Vorrichtung nach Anspruch 1, **dadurch gekennzeichnet, dass** die Verteilerstruktur (4) für den Brennstoff (3) und der Katalysatorträger (5) planar und/oder konzentrisch aufgebaut sind, wobei eine modulare Bauweise mit sich mehrfach wiederholender Anordnung möglich ist.

3. Verfahren zur Einstellung der Zündeigenschaft eines Brennstoffs (3), nutzend eine Vorrichtung nach einem der Ansprüche 1 oder 2, welche mindestens eine Verteilungszone (15), mindestens eine Oxidationszone (6) und mindestens eine Umwandlungszone (10) aufweist, wobei
a) in der Verteilungszone (15), welche eine Verteilungsstruktur (4) aufweist, Brennstoff (3) verteilt wird,
b) in der Oxidationszone (6) zumindest ein Teil des Brennstoffs mit mindestens einem Oxidationsmittel an mindestens einem Katalysator auf einem Katalysatorträger oxidiert wird,
c) in der Umwandlungszone (10) der verteilte Brennstoffs (3) und/oder anderer zugeführter Brennstoff thermisch und/oder katalytisch umgewandelt wird,
**dadurch gekennzeichnet, dass** durch
das Molverhältnis von im Oxidationsmittel (2) enthaltenen Sauerstoff zum zur vollständigen Oxidation des vorhandenen Brennstoffes (3) benötigten Sauerstoff,
und/oder den Druck in der Einheit (1)
die Zündeigenschaft des Brennstoffs eingestellt wird, wobei die Zündwilligkeit des Brennstoffs durch Änderung der chemischen Zusammensetzung gesenkt wird und zumindest ein Teil der durch die Oxidation in Schritt b) entstehenden Wärme durch Konvektion und durch Strahlung in die Verteilungszone (15) übertragen wird, in der eine Verdampfung von flüssigem Brennstoff (3) erfolgen kann, wobei das Oxidationsmittel so auf die Verteilungszone (15) geleitet wird, dass dieses anschließend zusammen mit dem Brennstoff (3) in die Oxidationszone (6) und/oder Umwandlungszone (10) geleitet wird.

4. Verfahren nach dem vorhergehenden Anspruch, **dadurch gekennzeichnet, dass** zumindest ein Teil der durch die Oxidation in Schritt b) entstehenden Wärme in die Umwandlungszone (10) übertragen wird.

5. Verfahren nach einem der Ansprüche 3 oder 4,
**dadurch gekennzeichnet, dass** die für die Verdampfung und/oder thermische und/oder katalytische Umwandlung in den Schritten a) und c) erforderliche Wärme im Wesentlichen durch die Oxidation in Schritt b) gewonnen wird.

6. Verfahren nach einem der Ansprüche 3 bis 5,
**dadurch gekennzeichnet, dass** die Zündeigenschaft zusätzlich über mindestens einen der folgenden Parameter eingestellt wird:
• die Abstände zwischen Oxidationsmitteleinlass (13), Katalysator und Verteilungsstruktur (4),
• Position und/oder Dimension und /oder Anzahl und/oder Form des Oxidationsmittel (13)- und Brennstoffeinlasses (12),
• Strömungsfeld des Oxidationsmittels
• Struktur und Zelldichte des Katalysatorträgers (5)
• dem Katalysatormaterial sowie dessen Verteilung auf dem Katalysatorträger (5)
• Anordnung und Form des Auslasses

7. Verfahren nach einem der Ansprüche 3 bis 6, **dadurch gekennzeichnet, dass** der umgewandelte Brennstoff (11) einer Verbrennungseinrichtung, bevorzugt einem Verbrennungsmotor, wie z.B. einem Benzinmotor, einem Dieselmotor oder einem Gasmotor, einer Turbine oder einem Brenner zugeführt wird.

8. Verfahren nach einem der Ansprüche 3 bis 6, **dadurch gekennzeichnet, dass** umgewandelter Brennstoff (11) einer Abgasnachbehandlungseinrichtung zugeführt wird.

## Claims

1. An apparatus for setting the ignition property of at least one fuel (3), configured to reduce the ignition readiness by altering the chemical composition comprising
• at least one fuel inlet (12) and at least one oxidant inlet (13),
• at least one dispersion zone (15) for dispersing the fuel (3) by means of at least one dispersion structure (4) for the fuel (3),
• at least one oxidation zone (6) for the at least partial oxidation of the fuel (3), comprising at least one catalyst support (5) with at least one catalyst,
• at least one conversion zone for the catalytic and/or thermal conversion of the fuel (3) and
• at least one outlet for fuel (11) having an altered ignition property,
wherein the oxidant inlet (13), the catalyst support (5) and the dispersion zone (15) are arranged and configured in such a way that heat evolved in the oxidation zone (6) can be transferred to a gas or gas mixture (2) flowing into the dispersion zone (15), wherein the dispersion zone (15) is configured in such way, that liquid fuel (3) can vaporized in the dispersion zone (15),
**characterized in that** the catalyst support (5) is arranged between the dispersion structure (4) for the fuel (3) and oxidant inlet (13) in such a way, that gas or gas mixture (2) flowing out from the oxidant inlet (13) is conducted onto the dispersion zone (15) in such a way that it is subsequently discharged together with the fuel (3) into the oxidation zone (6) and/or conversion zone (10),
wherein the catalyst support (5) contains an open-pored structure or flow channels (14), which assist flow of the oxidant (2) through to the dispersion zone.

2. The apparatus as claimed in claim 1, **characterized in that** the dispersion structure (4) for the fuel (3) and the catalyst support (5) have a planar and/or concentric structure, with a module construction having a multiply repeating arrangement being possible.

3. A process for setting the ignition property of a fuel (3) utilizing an apparatus as claimed in any of claims 1 or 2, which has at least one dispersion zone (15), at least one oxidation zone (6) and at least one conversion zone (10), wherein
a) fuel (3) is dispersed in the dispersion zone (15) which has a dispersion structure (4),
b) at least part of the fuel is oxidized in the oxidation zone (6) by means of at least one oxidant over at least one catalyst on a catalyst support,
c) the dispersed fuel (3) and/or another fuel fed in is thermally and/or catalytically converted in the conversion zone (10),
**characterized in that**
the ignition property of the fuel is set by means of the molar ratio of oxygen present in the oxidant (2) to the oxygen required for complete oxidation of the fuel (3) present,
and/or the pressure in the unit (1)
wherein the ignition readiness is reduced by altering the chemical composition and at least part of the heat evolved by the oxidation in step b) is transferred by convection and radiation into the dispersion zone (15), wherein vaporization of liquid fuel (3) can take place in the dispersion zone (15), wherein the oxidant is fed to the dispersion zone (15) in such a way that it is subsequently conveyed together with the fuel (3) into the oxidation zone (6) and/or conversion zone (10).

4. The process as claimed in the preceding claim, **characterized in that** at least part of the heat evolved by the oxidation in step b) is transferred into the conversion zone (10).

5. The process as claimed in any of the claims 3 or 4, **characterized in that** the heat required for the vaporization and/or thermal and/or catalytic conversion in steps a) and c) is obtained substantially by means of the oxidation in step b).

6. The process as claimed in any of the claims 3 to 5, **characterized in that** the ignition property is additionally set by means of at least one of the following parameters:
• the distances between oxidant inlet (13), catalyst and dispersion structure (4),
• position and/or dimension and/or number and/or shape of the oxidant inlet (13) and fuel inlet (12),
• flow field of the oxidant,
• structure and cell density of the catalyst support (5),
• the catalyst material and the distribution thereof on the catalyst support (5),
• arrangement and shape of the outlet.

7. The process as claimed in any of the claims 3 to 6, **characterized in that** the converted fuel (11) is fed to a combustion apparatus, preferably an internal combustion engine such as a petrol engine, a diesel engine or a gas engine, a turbine, or a burner.

8. The process as claimed in any of the claims 3 to 6, **characterized in that** converted fuel (11) is fed to an exhaust gas treatment apparatus.

## Revendications

1. Dispositif pour l'ajustement de la propriété d'allumage d'au moins un combustible (3), configuré pour abaisser l'aptitude à l'allumage du combustible par modification de la composition chimique, contenant :
- au moins une entrée de combustible (12) et au moins une entrée d'oxydant (13),
- au moins une zone de distribution (15) pour la distribution du combustible (3), munie d'au moins une structure distributrice (4) pour le combustible (3),
- au moins une zone d'oxydation (6) pour l'oxydation au moins partielle du combustible (3), contenant au moins un support de catalyseur (5) muni d'au moins un catalyseur,
- au moins une zone de conversion (10) pour la conversion catalytique et/ou thermique du combustible (3), et
- au moins une sortie pour le combustible (11) à propriété d'allumage modifiée,
l'entrée d'oxydant (13), le support de catalyseur (5) et la zone de distribution (15) étant agencées et conçues de telle sorte que de la chaleur formée dans la zone d'oxydation (6) peut être transférée à un gaz ou mélange gazeux (2) s'écoulant dans la zone de distribution (15), la zone de distribution (15) étant configurée de telle sorte que du combustible liquide (3) peut être vaporisé dans la zone de distribution (15),
**caractérisé en ce que** le support de catalyseur (5) est agencé entre la structure distributrice (4) pour le combustible (3) et l'entrée d'oxydant (13) de telle sorte qu'un gaz ou mélange gazeux (2) s'écoulant depuis l'entrée d'oxydant (13) est acheminé sur la zone de distribution (15) de telle sorte que celui-ci est ensuite déchargé conjointement avec le combustible (3) dans la zone d'oxydation (6) et/ou la zone de conversion (10),
le support de catalyseur (5) présentant une structure poreuse ouverte ou des canaux d'écoulement (14), qui favorisent un écoulement de l'oxydant (2) jusqu'à la zone de distribution.

2. Dispositif selon la revendication 1, **caractérisé en ce que** la structure distributrice (4) pour le combustible (3) et le support de catalyseur (5) sont construits sous forme planaire et/ou concentrique, une construction modulaire avec un agencement se répétant à plusieurs reprises étant possible.

3. Procédé d'ajustement de la propriété d'allumage d'un combustible (3), utilisant un dispositif selon l'une quelconque des revendications 1 ou 2, qui comprend au moins une zone de distribution (15), au moins une zone d'oxydation (6) et au moins une zone de conversion (10),
a) du combustible (3) étant distribué dans la zone de distribution (15), qui comprend une structure distributrice (4),
b) au moins une partie du combustible étant oxydé avec au moins un oxydant sur au moins un catalyseur sur un support de catalyseur dans la zone d'oxydation (6),
c) le combustible distribué (3) et/ou un autre combustible introduit étant converti thermiquement et/ou catalytiquement dans la zone de conversion (10), **caractérisé en ce que** par
le rapport molaire entre l'oxygène contenu dans l'oxydant (2) et l'oxygène nécessaire pour l'oxydation totale du combustible présent (3),
et/ou la pression dans l'unité (1),
la propriété d'allumage du combustible est ajustée, l'aptitude à l'allumage du combustible étant abaissée par modification de la composition chimique et au moins une partie de la chaleur formée par l'oxydation dans l'étape b) étant transférée par convexion et par rayonnement dans la zone de distribution (15), dans laquelle une vaporisation de combustible liquide (3) peut avoir lieu, l'oxydant étant acheminé sur la zone de distribution (15) de telle sorte que celui-ci est ensuite acheminé conjointement avec le combustible (3) dans la zone d'oxydation (6) et/ou la zone de conversion (10).

4. Procédé selon la revendication précédente, **caractérisé en ce qu'**au moins une partie de la chaleur formée par l'oxydation dans l'étape b) est transférée dans la zone de conversion (10).

5. Procédé selon l'une quelconque des revendications 3 ou 4, **caractérisé en ce que** la chaleur nécessaire pour la vaporisation et/ou la conversion thermique et/ou catalytique dans les étapes a) et c) est essentiellement obtenue par l'oxydation dans l'étape b) .

6. Procédé selon l'une quelconque des revendications 3 à 5, **caractérisé en ce que** la propriété d'allumage est en outre ajustée par l'intermédiaire d'au moins un des paramètres suivants :
- les distances entre l'entrée d'oxydant (13), le catalyseur et la structure de distribution (4),
- la position et/ou la dimension et/ou le nombre et/ou la forme de l'entrée d'oxydant (13) et de combustible (12),
- le champ d'écoulement de l'oxydant,
- la structure et la densité cellulaire du support de catalyseur (5),
- le matériau du catalyseur, ainsi que sa distribution sur le support de catalyseur (5),
- l'agencement et la forme de la sortie.

7. Procédé selon l'une quelconque des revendications 3 à 6, **caractérisé en ce que** le combustible converti (11) est introduit dans un appareil à combustion, de préférence un moteur à combustion, tel que p. ex. un moteur à essence, un moteur diesel ou un moteur à gaz, une turbine ou un brûleur.

8. Procédé selon l'une quelconque des revendications 3 à 6, **caractérisé en ce que** le combustible converti (11) est introduit dans un appareil de post-traitement de gaz d'échappement.
